# EUROPEAN PATENT APPLICATION

(11) **EP 1 548 205 A1**
(43) Date of publication of application: **29.06.2005**
(21) Application number: 02797990.5
(22) Date of filing: 10.09.2002
(51) Int. Cl.: E04F 13/08, F16B 35/06

(54) **ASSEMBLY OF DEVICES FOR FIXING PANELS TO A WALL AND THE CORRESPONDING APPLICATION METHOD**

(30) Priority: 13.09.2001 ES 200102060
(71) Applicant: Aramburu Echeverria, Sebastian, 46006 Valencia (ES); Aramburu, Suzanne, 75013 Paris (FR)
(72) Inventor: ARAMBURU ECHEVERRIA, Sebastián, E-46006 Valencia (ES)
(74) Representative: Sanz-Bermell Martinez, Alejandro
(86) International application number: PCT/ES2002/000426
(87) International publication number: WO 2003/023165

(57) **Abstract**

Set of devices for securing panels to the wall and corresponding application method.

This consists of an assembly made up of a plug fitted with a thread at one end, a stud, a nut, a head and a securing base, so that the plug holds the stud whose insertion determines a plane with the others; the head is threaded to the stud and temporarily has a marker at one end to make the milling in the panel which house the securing bases. The securing bases consist of a rotating body with an annular neck. The heads have flaps which go into the bases through elastic deformation and expand after insertion, determining permanent securing. A method is designed for application of the set of devices.

For application in manufacturing and application of means for securing panels, wood, metal, marble or others, to walls.

## Description

Set of devices for securing panels to the wall and corresponding application method.

The technical field involved in this patent is that of wall facing with panels.

Walls are faced for different reasons. The first reason is simply for decoration. It proves more simple to panel than to build a wall. A second reason is to conceal the flaws seen on damaged walls. When a wall is painted, for example, after formerly having problems with damp, it proves difficult to get rid of the traces of such damage. Panelling proves a highly favourable option for a definitive solution. A third reason is isolation. Certain houses do not have a double wall and require an insulation space between the inhabitable zone and the outside of the house. The panel constitutes a simple and highly economic means for favouring an isolated internal atmosphere, more economic to maintain at a comfortable temperature and easy to install.

The device and method are similarly appropriate for securing marble panels to facades in a highly efficient and lasting way. Insulating panels can also be fitted on the outside of the facades, of materials other than the ones stated, such as those of a metal structure.

Statement of the Prior State of the Art. The technique known up to now for the arrangement and securing of panels, whether insulating or not, includes securing by through-screws, which is undesirable, arrangement in hidden tabs to be screwed on and covered by the adjacent panel which is nailed, with weak fastening power and securing by means of moulding plaster or similar.

All these traditional means involve the disadvantage of complex securing and arrangement, with plaster, especially for marble, offering a lower guarantee than the means displayed in this invention.

The object of this invention is a set of devices for securing panels to the wall and a corresponding application method.

In order to make the following explanation clearer, seven sheets of drawings are enclosed representing the essence of this invention in seven figures.

Figure 1 shows an open perspective view of the assembly.

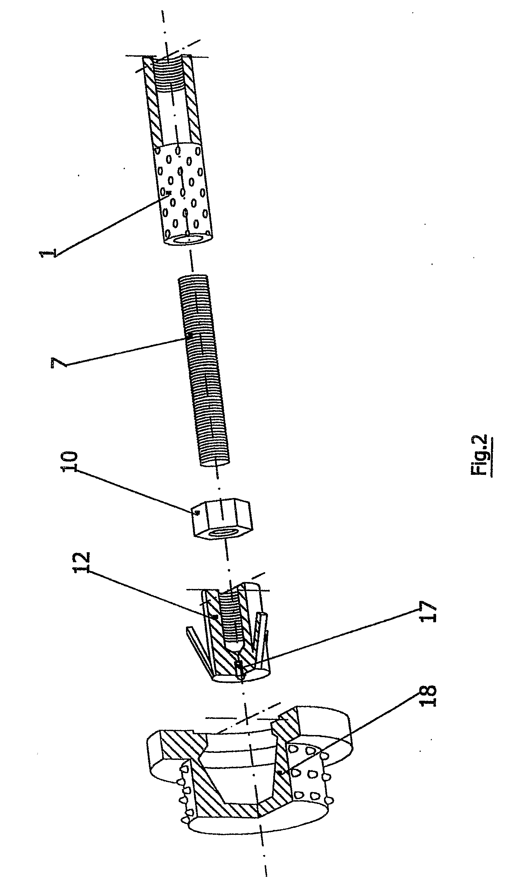

Figure 2 shows an exploded view and partial open perspective of this assembly.

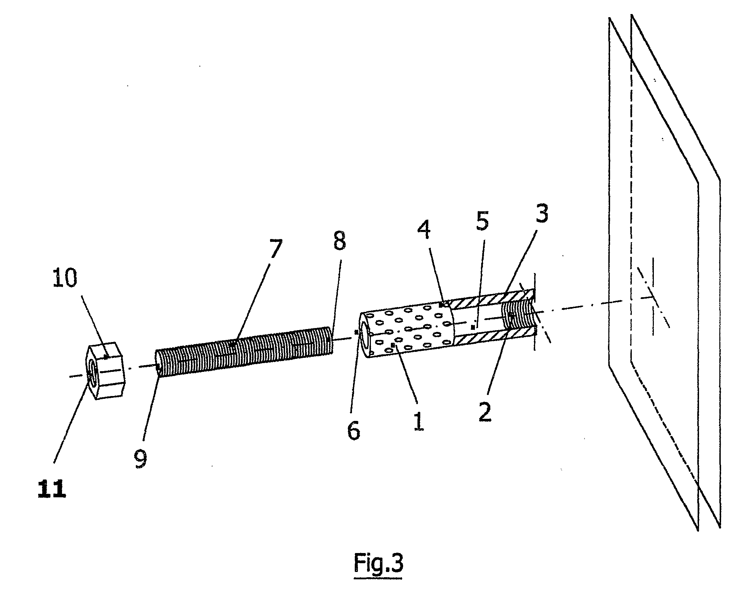

Figure 3 shows an exploded view and partial open perspective view of the assembly complementary to Figure 2.

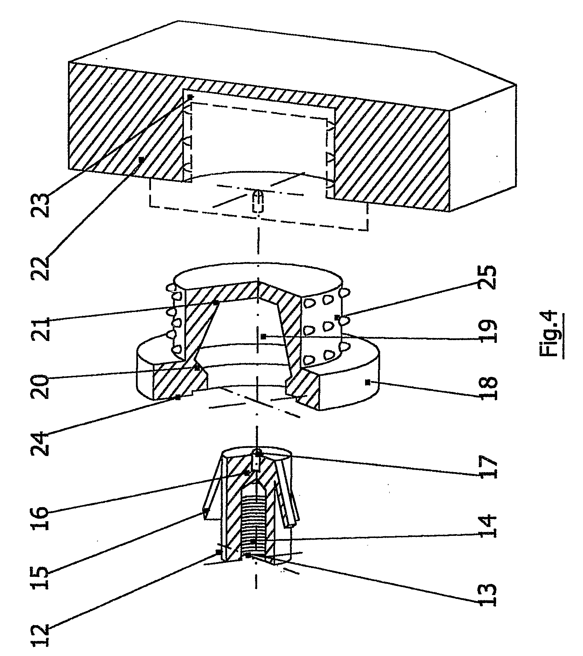

Figure 4 shows a view of the diagram for arrangement of the part on the board.

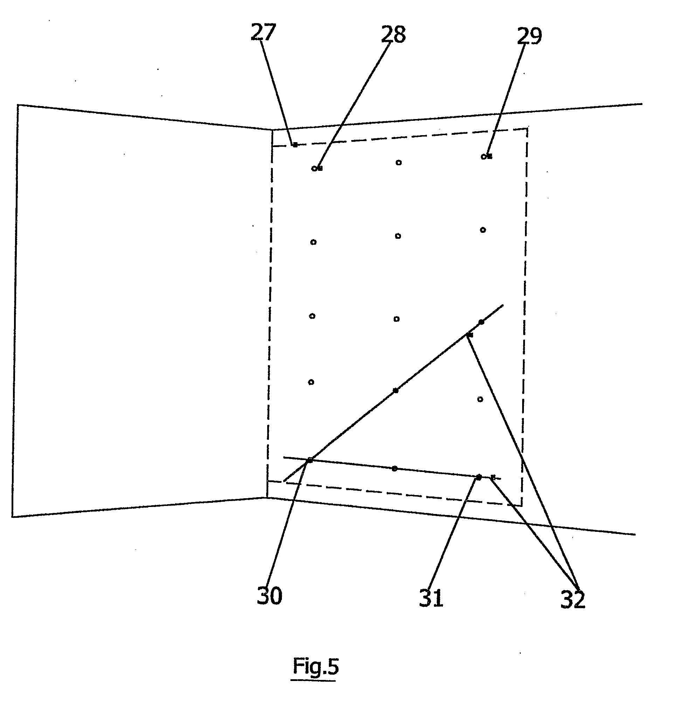

Figure 5 represents the wall and the corresponding planimetric layout.

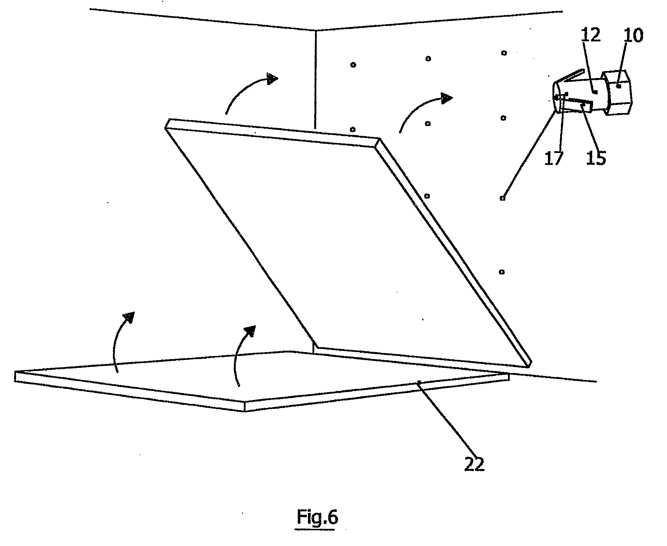

Figure 6 represents a diagram of the wall and the panel during the later process of marking this.

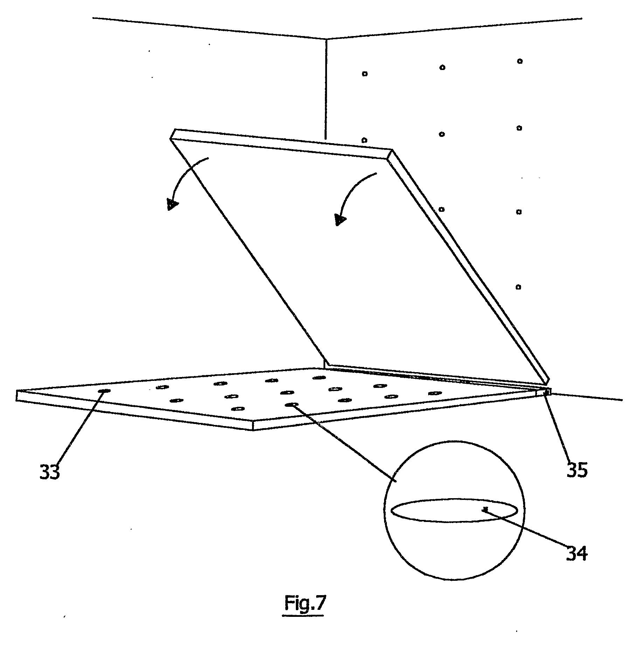

Figure 7 shows the panel to be fitted with holes which house the securing heads.

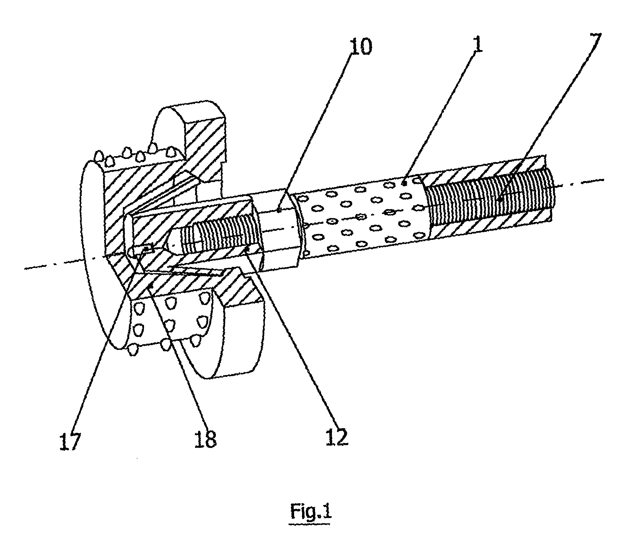

In these figures 1 represents the plug for insertion into the wall, 2 being the thread made in the bottom of the plug, 3 being the external body of the plug which is compressible in a longitudinal sense and expandable in the transversal sense, 4 being the slots which facilitate the contraction-expansion of the body of the plug, 5 being the through hole of the plug, 6 being the support of the pressure nut on the outside of the plug, 7 being the stud, 8 the end of the stud corresponding to the thread 2 of the plug 1, with 9 being end of the stud corresponding to the nut, 10 being the nut, with 11 being the pitch of the nut, 12 the head, 13 the rear hole of the head, 14 the thread of the hole 13 according to stud 7, 15 being the flaps of the head formed as oblique prolongations to the body of the head, 16 being the front hollow of the head, intended to temporarily house a marking instrument shown as 17, 18 being the securing base complementary to the head 12 essentially formed of a rotating body, 19 the interior space of the securing base, 20 the annular closure of the securing base, 21 the bottom of the securing base 18 whose walls preferentially form an angle over 90° with this base facilitating the expansion of the flaps 15, 22 the panel, 23 the space between the base and the bottom of the panel recess, 24 the annular protrusion of the base, 25 being the projections for pressure insertion on the panel, 26 being the wall, 27 the dimensions of the panel on the wall, 28 being point I, 29, point II, 30 point III, with 31 point IV, 32 being the marking lines, 33 the points marked on the panel, 34 being the holes made in points 33, 35 the spacers from the floor.

The set of devices determines an ordered usage, the method for its use being as follows:
1. The space taken up by the board on the wall is indicated by means of marks which clearly limit the position and dimensions of the panel.
2. Four marks are made on the wall.
3. Holes are made in the places marked by said four points, and in other places according to the size of the panel and convenience.
4. Starting from the points preferentially made at the ends, which are aligned, levelled and forming a plane normal to the ground, that is at 90º from the ground, by means of turning the nuts 10 and the possible usage of studs of greater length where appropriate.
5. The other points on the same plane normal to the ground are established by using marking lines.
6. The heads are threaded onto the ends of the studs which are left visible projecting from the wall.
7. The marking instruments are set out in each of the front hollows 16 of each of the heads.
8. The panel is lifted up as in its definitive position and backed on to the wall. Spacers can be used if a panel support skirting board is to be used to form the definitive real position of the panel.
9. The panel is pressed against the markers once.
10. The panel is removed. The panel has the points marked by the markers 17.
11. The holes in the panel are milled.
12. The securing bases are pressed in.
13. The panel is pressed against the wall; inserting the heads in the internal spaces of the securing bases and retaining these by means of the flaps 15 prevents any extraction.

The devices applied for this purpose, as has been described, are the plug, which constitutes the coupling to the wall, the stud and the nut which complementarily constitute the means for expanding the plug and keeping this immobile in the wall. The alignment of the plane is achieved by means of pressure or relaxation of pressure by the nut 10. The frontal hollow of the heads, which are inserted threaded onto the studs projecting from the wall, is intended for placing a tool or marking instrument, which accurately determines each of the milling points of the panel. The pressure insertion on the panel takes place by means of the cohesion generated by the insertion pressure of the securing base on the panel and, by means of the projections 25 set in the external perimeter cylindrical portion of the securing bases, prevents the extraction of said securing base. The insertion can conveniently be performed by blows, for which reason an annual reinforcement 24 has been designed, formed of an annular protrusion of the base, in order to prevent a blow from breaking the annular closure 20. The later insertion of the head in the securing base by means of elastic pressure which temporarily deforms the flaps 15, which expand inside, ensures that the panel is securely fixed to the wall. Later on a skirting board is added, where applicable, and a moulding or cornice, similarly where applicable.

A form of embodiment has been extensively explained by the previous statements.

This is for industrial application in making and applying means for securing panels, wood, metal, marble or others to walls.

## Claims

1. A set of devices for securing panels to walls, **characterised by** forming an assembly strictly speaking consisting of at least:
- a plug (1) for insertion into the wall
- a stud (7)
- anut(10)
- a head (12)
- a complementary securing base (18) for securing the head to the panel (22).

2. An assembly according to claim 1, **characterised in that** the plug (1) has an expandable and compressible hollow body (5).

3. An assembly according to claims 1 or 2, **characterised in that** the plug (1) has a thread (2) at one end and a pitch (5) for the stud (7) on its inside.

4. An assembly according to claim 1 and either of claims 2 or 3, **characterised in that** the plug (1) is able to take a stud (7) and this is able to be adjusted by its insertion to a greater or lesser depth in the relevant wall.

5. An assembly according to claim 1 and any of claims 2 to 4, **characterised in that** the stud (7) has an end for inserting into the thread (2) of the plug and one end for the pitch (11) of the nut (10).

6. An assembly according to claim 1 and any of claims 2 to 5, **characterised in that** the nut (10), when appropriately pressed, allows a part of the stud (7) to project, able to be inserted and secured in the hole (13) of the head (12).

7. An assembly according to claim 1 and any of claims 2 to 6, **characterised in that** the head (12) is fitted with a thread (14), rear hole (13), flaps (15) and a front hollow (16).

8. An assembly according to claim 1 and any of claims 2 to 7, **characterised in that** the front hollow (16) constitutes the temporary housing for a marker (17) able to colour or punch the centre of the relevant head in the panel.

9. An assembly according to claim 1 and any of claims 2 to 8, **characterised in that** the head (12) is fitted with flaps (15) at the front, and these are formed of external oblique prolongations of the body of this head.

10. An assembly according to claim 1 and any of claims 2 to 9, **characterised in that** the securing base (18) is formed of a piece of a figure formed by a rotating body complementary to the head (12) and is fitted with an annular neck (20).

11. An assembly according to claim 1 and any of claims 2 to 10, **characterised in that** the bottom (21) of the securing base (18) is coupled to the rotating walls by walls which form an angle over 90º in respect of the base.

12. An assembly according to claim 1 and any of claims 2 to 10 and 11, **characterised** because the internal space (19) of the securing base (18) is able to complementarily receive the front part of one of the heads (12), whose flaps are housed in the interior expanded part of the annular closure (20) through deformation and relevant elastic extension.

13. An assembly according to claim 1 and any of claims 2 to 10 and 12, **characterised in that** the securing base (18) has an annular protrusion (24) of the external perimeter zone set on the solid portion of the rotating body forming said securing base and is able to similarly form the support for pressing or hitting said part during insertion into the hole of the corresponding panel (22).

14. An assembly according to claim 1 and any of claims 2 to 13, **characterised in that** the securing base (18) has projections (25) set in the external perimeter cylindrical portion of said securing base, for pressure insertion and retaining of the part in the hole (11) of the panel.

15. Method for application of the set of devices for securing panels to the wall, **characterised in that** the device claimed in claims 1 to 15 is used in a procedure involving the following steps:
1. The space taken up by the board is marked on the wall by means of marks which clearly limit the position and dimensions of the panel.
2. Four points are marked on the wall.
3. Holes are made in the places marked by said four points, and in other places according to the size of the panel and convenience.
4. The process starts from the points arranged preferably at the ends, which are aligned, levelled and form a plane normal to the ground, by means of rotating the nuts (10) and the possible usage of studs of greater length where applicable.
5. The other points on the same plane normal to the ground are regulated by arrangement of the marking lines.
6. The heads are threaded onto the ends of the studs which were left projecting from the wall.
7. The marking instruments are arranged on each of the front hollows (16) in each of the heads.
8. The panel is lifted up according to its definitive position and is backed on to the wall. Spacers can be used if a panel support skirting board is going to be used, to form the definitive real position of the panel.
9. The panel is pressed against the markers once.
10. The panel is removed. The panel has the points marked by the markers (17).
11. The panel holes are milled.
12. The securing bases are pressed in.
13. The panel is pressed against the wall: extraction is prevented by inserting the heads into the internal spaces of the securing bases and retaining these by means of the flaps (15).
